# EUROPÄISCHE PATENTSCHRIFT

(11) **EP 2 595 785 B1**
(45) Veröffentlichungstag und Bekanntmachung des Hinweises auf die Patenterteilung: **04.03.2015**
(21) Anmeldenummer: 11725009.2
(22) Anmeldetag: 23.05.2011
(51) Int. Cl.: B29C 45/14, F16B 19/02, F16B 15/02

(54) **SPRITZGUSSTEIL UND SPRITZGUSSVERFAHREN**
INJECTION MOLDED PART AND INJECTION MOLDING METHOD
PIÈCE MOULÉE PAR INJECTION ET PROCÉDÉ DE MOULAGE PAR INJECTION

(30) Priorität: 23.07.2010 DE 102010036596
(43) Veröffentlichungstag der Anmeldung: 29.05.2013
(73) Patentinhaber: ContiTech Vibration Control GmbH, 30165 Hannover (DE)
(72) Erfinder: SCHNEIDER, Diethard, 29336 Nienhagen (DE); WICHMANN, Marc, 30916 Isernhagen (DE); BRODERSEN, Jan, 30826 Garbsen (DE); LINGNER, Thomas, 29690 Lindwedel (DE); EBERHARD, Günter, Gehrden 30989 (DE)
(74) Vertreter: Finger, Karsten
(86) Internationale Anmeldenummer: PCT/EP2011/058323
(87) Internationale Veröffentlichungsnummer: WO 2012/010346

(56) Entgegenhaltungen:
- GB-A- 2 005 371
- JP-A- 2004 042 561
- JP-A- 2006 132 597
- US-A- 6 082 699

## Beschreibung

Die Erfindung betrifft ein Spritzgussteil mit (a) einem hülsenförmigen Einlegeteil aus Metall, das eine Längsachse, eine Stirnfläche, eine Ausnehmung, die durch die Stirnfläche verläuft, das Einlegeteil durchgreift und zum Durchstecken einer Schraube ausgebildet ist, und eine äußere Mantelfläche aufweist, und (b) einem Kunststoffkörper, der die äußere Mantelfläche umgibt und eine Schrauben-Kontaktfläche aufweist, die sich entlang einer Kontaktebene erstreckt, die senkrecht zur Längsachse und bezüglich einer Höhe entlang der Längsachse im Bereich der Stirnfläche verläuft.

Derartige Spritzgussteile werden beispielsweise im Automobilbau eingesetzt, da sie einfach zu fertigen sind und ein geringes Gewicht aufweisen. Zum formschlüssigen Verbinden, beispielsweise Verschrauben, dieser Spritzgussteile mit anderen Komponenten, beispielsweise des Automobils, ist es notwendig, dass das Einlegeteil aus Metall vorhanden ist, so dass beispielsweise eine Schraube in das Einlegeteil eingreifen kann. Die Schraubverbindung mit dem Einlegeteil aus Metall ist hinreichend stabil, wohingegen eine Schraubverbindung ausschließlich mit dem Kunststoff in der Regel die Festigkeitsanforderungen nicht erfüllt.

Um das Gewicht, beispielsweise des Automobils, senken zu können, ist es notwendig, das Gewicht aller Komponenten zu reduzieren. Bislang konnten Spritzgussteile jedoch nicht im Bereich des Einlegeteils leichter ausgebildet werden, da die Festigkeitsanforderungen ansonsten nicht mehr eingehalten werden können. Zwar wäre es möglich, höherfeste Kunststoffe zu verwenden oder die Konstruktion des Spritzgussteils im Bereich um das Einlegeteil zu ändern, das aber ist bislang wegen des damit verbundenen höheren Fertigungsaufwandes nicht möglich. So weisen die Einlegeteile aus Metall geometrische Toleranzen auf. Je höher die Anforderungen an die Toleranz, desto aufwändiger ist die Fertigung des Einlegeteils.

Die GB 2 005 371 A betrifft einen rohrförmigen Einsatz zur Verwendung in einer Anordnung zum Montieren eines Teils auf einem Basiselement, welches zur Aufnahme in einem Befestigungsloch in dem Teil angepaßt ist. Ein Befestigungselement wie beispielsweise ein Bolzen oder eine Maschinenschraube kann dann durch den Einsatz in dem Befestigungsloch zur Befestigung an dem Basiselement eingefügt werden. Der Einsatz weist mindestens eine ringförmige Nut in der äußeren Oberfläche auf. Wenn der Einsatz einer axialen Kompression durch das Befestigungselement unterzogen wird, kollabiert die Einlage gleichmäßig in einer axialen Richtung, um einen wesentlichen Anteil der gesamten Druckbelastung auf das Festziehen des Befestigungselements auszuüben.

Der Erfindung liegt die Aufgabe zugrunde, ein für die Massenfertigung geeignetes Spritzgussteil anzugeben, das bei gleicher Festigkeit mit geringerem Gewicht herstellbar ist, sowie ein dafür geeignetes Verfahren und eine geeignete Spritzgießmaschine bereitzustellen.

Die Erfindung wird durch die Merkmale der Ansprüche 1 und 8 definiert.

Die Erfindung löst das Problem gemäß einem ersten Aspekt durch ein gattungsgemäßes Spritzgussteil, bei dem die Schrauben-Kontaktfäche einen Unterstand zur Stirnfläche aufweist, wobei der Unterstand so groß ausgebildet ist und das ein Teil bezüglich der Längsachse eine solche Federkonstante aufweist, dass durch Ausüben einer Spannkraft senkrecht auf die Stirnfläche mittels der Schraube das Einlegeteil so aufgrund der Spannkraft deformierbar ist dass ein vorgegebener Teil der Spannkraft der Schraube in die Schrauben-Kontaktfläche einleitbar ist.

Vorteilhaft an dem erfindungsgemäßen Spritzgussteil ist, dass ein nur kleiner Teil der zum Befestigen des Spritzgussteils an einem dritten Objekt notwendigen Spannkraft über die Schrauben-Kontaktfläche direkt in den Kunststoff eingeleitet werden muss. Dadurch kann das Einlegeteil kleiner dimensioniert und damit kostengünstiger hergestellt werden. Das führt zu einer Gewichtsreduktion des Spritzgussteils. Im Idealfall muss der Kunststoffkörper in der Umgebung des Einlegeteils nur so groß sein, dass die vom Einlegeteil kommende Kraft sicher aufgenommen wird.

Im Rahmen der vorliegenden Anmeldung wird unter dem Einlegeteil- insbesondere jedes Metallobjekt verstanden, das dauerhaft mit dem ihn umgebenden Kunststoff im fertigen Spritzgussteil verbunden ist. Es ist möglich, dass das Spritzgussteil mehrere derartiger hülsenförmiger Einlegeteile aufweist. Günstig ist es, wenn das Einlegeteil aus Stahl gefertigt ist. Bei dem Kunststoff kann es sich insbesondere um Polyamid handeln, das beispielsweise faserverstärkt ist. Günstig ist es, wenn die Ausnehmung zylinderförmig ist. Beispielsweise handelt es sich bei der Ausnehmung um eine Bohrung. Vorzugsweise umgibt der Kunststoffkörper die äußere Mantelfläche nur radial, so dass eine Schraube durch die Ausnehmung durchgesteckt werden kann.

Unter der Federkonstante bezüglich der Längsachse ist insbesondere derjenige Quotient aus [der dazu notwendigen Kraft als Zähler angelegten] der elastischen und/oder plastischen Verformung, bis der Unterstand ausgeglichen ist, als Nenner gemeint.

Gemäß einer bevorzugten Ausführungsform ist das Einlegeteil hohlzylinderförmig. Ein derartiges Einlegeteil ist besonders einfach herzustellen. Es ist möglich, dass das Einlegeteil auf seiner äußeren Mantelfläche eine Krafteinleitstruktur zum Verbessern des Einleitens von Kräften aus dem Einlegeteil in den umgebenden Kunststoff aufweist, beispielsweise Rippen oder Vorsprünge.

Vorzugsweise ist die Schrauben-Kontaktfläche eine Bodenfläche einer Einsenkung im Kunststoffkörper, wobei ein Innen-Durchmesser der Einsenkung um ein vorgegebenes Toleranzmaß größer ist als ein Kopf der Schraube. Wenn die Einsenkung nicht zylinderförmig ist, ist unter dem Innen-Durchmesser der Durchmesser des Innenzylinders gemeint, also desjenigen Zylinders maximalen Durchmessers, der gerade in die Einsenkung passt. Das Toleranzmaß ist beispielsweise größer als ein Hundertstel eines Durchmessers des Kopfes der Schraube und kleiner als das 0,2-fache dieses Durchmessers.

Gemäß einer bevorzugten Ausführungsform sind der Unterstand und das Einlegeteil so groß ausgebildet, dass ein Kraftfluss der Spannkraft der Schraube zu mindestens 80%, insbesondere zu mindestens 85%, in das Einlegeteil in den Kunststoffkörper verläuft. Hierunter ist insbesondere zu verstehen, dass der Quotient aus dem Flächenintegral über den Druck, den die Schraube auf das Spritzgussteil ausübt, als Nenner, und dem Flächenintegral über alle Spannkraft-Anteile, die die Schraube auf das Einlegeteil ausübt, als Zähler, zumindest 0,8, insbesondere mindestens 0,85, beträgt

Insbesondere beträgt dieser Quotient höchstens 0,95, insbesondere 0,9. Bei gleicher Spannkraft, die die Schraube auf das Spritzgussteil ausübt, muss das Einlegeteil damit höchstens das 0,9-fache derjenigen Belastung tragen, die ohne die erfindungsgemäße Ausgestaltung zu tragen wäre. Dadurch kann das Einlegeteil kleiner und/oder leichter ausgebildet werden.

Gemäß der Erfindung besitzt die Schrauben-Kontaktfläche zumindest eine Erhebung. Günstig ist es, wenn die Fuß fläche der Erhebung, also derjenige Teil der Erhebung, der in der Kontaktebene liegt, kleiner ist als ein Drittel der Schrauben-Kontaktfläche. Beim Erhöhen der Spannkraft der Schraube gelangt diese Erhebung früher in Kontakt mit der Schraube als die Schrauben-Kontaktfläche und nimmt daher früher Last auf. Auf diese Weise kann der Kraftfluss in den Kunststoffkörper gezielt beeinflusst werden, um die Festigkeit des Spritzgussteils zu erhöhen.

Besonders bevorzugt besitzt die Ausnehmung des Einlegeteils eine Ausnehmungs-Längsachse, wobei die Erhebung bezüglich einer Höhe entlang der Ausnehmungs-Längsachse die Stirnfläche überragt. Das führt dazu, dass eine die Ausnehmung durchgreifende Schraube, die eine zunehmende Spannkraft ausübt, zuerst mit der Erhebung und erst danach mit der Stirnfläche des Einlegeteils in Kontakt kommt. So wird ein lokal besonders großer Kraftfluss in den Kunststoffkörper ermöglicht.

Gemäß einer bevorzugten Ausführungsform weist das Spritzgussteil eine das Einlegeteil radial umgebende Senkung auf, deren Querschnittsfläche ausgebildet ist zum Verhindern eines Eindringens von Kunststoff zwischen die erste Stirnfläche und die Schraube beim Ausüben der Spannkraft auf die Stirnfläche mittels der Schraube. Beim Erhöhen der Spannkraft mit der Schraube kann es zu einer Fließbewegung von Kunststoff des Kunststoffkörpers kommen. Um zu verhindern, dass dieser Kunststoff in den Bereich der Stirnfläche gelangt, kann die angegebene Senkung vorgesehen sein.

Günstig ist es, wenn die Senkung zumindest doppelt so tief ist wie der Unterstand. Das heißt, dass die Senkung gegenüber der Schrauben-Kontaktfläche zumindest um den Unterstand zurückgesetzt ist, den die Schrauben-Kontaktfläche gegenüber der Stirnfläche aufweist. So wird das Eindringen von Kunststoff in den Bereich der Stirnfläche wirksam unterbunden.

Vorzugsweise besitzt die Schrauben-Kontaktfläche zusätzlich zur Senkung zumindest eine Vertiefung, wobei diese Vertiefung insbesondere eine Tiefe hat, die zumindest dem Unterstand entspricht. Im Bereich um eine derartige Vertiefung ist der Kraftfluss von der Schraube in den Kunststoffgrundkörper unterbrochen, so dass eine geringere mechanische Belastung des Kunststoffkörpers resultiert.

Erfindungsgemäß ist zudem eine Vorrichtung, insbesondere ein Kraftfahrzeug, mit zumindest einem erfindungsgemäßen Spritzgussteil und einer Schraube, die die Ausnehmung entlang der Ausnehmungs-Längsachse durchgreift und so das Spritzgussteil an einem Objekt befestigt, wobei der Kraftfluss der Spannkraft der Schraube zu mindestens 80%, insbesondere durch zumindest 85%, durch das Einlegeteil in den Kunststoffkörper verläuft.

Die Erfindung betrifft zudem ein Verfahren zum Herstellen eines erfindungsgemäßen Spritzgussteils mit den Schritten (a) Einlegen eines Einlegeteils aus Metall in eine Spritzgussform, (b) Schließen der Spritzgussform und (c) Umspritzen des Einlegeteils mit einem Kunststoff, so dass das Spritzgussteil entsteht.

Die Erfindung löst das Problem zudem durch ein gattungsgemäßes Verfahren, bei dem die Spritzgussform so geschlossen wird, dass das Einlegeteil plastisch deformiert wird.

Vorteilhaft an der erfindungsgemäßen Lösung ist, dass die Einlegeteile eine größere Toleranz haben können als bei bisherigen Verfahren. Dadurch, dass die Spritzgussform so geschlossen wird, dass das Einlegeteil plastisch deformiert wird, wird nämlich das Einlegeteil um so mehr deformiert, um so größer es ist, umso mehr es also nach oben von der Nenngröße abweicht. Bei einer plastischen Deformation verformt sich das Einlegeteil so, dass es sich bei einem späteren Öffnen der Spritzgussform um einen elastischen Rückfederweg längt. Der absolute Betrag, um den sich das Einlegeteil bei Öffnen der Spitzgussform längt, hängt aber im Wesentlichen nicht von dem Grad der plastischen Deformation des Einlegeteils beim Schließen der Spritzgussform ab, sondern nur von der elastischen Deformation, die bei Einlegeteilen gleichen Materials stets gleich ist. Die geometrischen Abmaße des Einlegeteils relativ zum umgebenen Kunststoff sind daher nach dem Entformen der Spritzgussform mit hoher Genauigkeit bekannt, auch wenn die Abmessungen des Einlegeteils vor dem Einbringen in die Spritzgussform variieren.

In anderen Worten bezieht sich die Erfindung auf ein Verfahren zum Herstellen eines Spritzgussteils, bei dem beim Schließen der Spritzgussform das Einlegeteil umgeformt wird. Die Spritzgussform wirkt deshalb gleichzeitig als Umformwerkzeug. Da aus diesem Grund für das Einlegeteil nur eine weniger anspruchsvolle Toleranz eingehalten werden muss, kann das Einlegeteil mit geringerem fertigungstechnischem Aufwand hergestellt werden, was den Gesamtaufwand für die Herstellung des Spritzgussteils senkt.

Es ist ein weiterer Vorteil, dass die Spritzgussform einfacher hergestellt werden kann. Bei bisherigen Verfahren zum Herstellen eines Spritzgussteils weist die Spritzgussform im Bereich des Einlegeteils einen Werkzeugeinsatz auf, der relativ zur übrigen Spritzgussform beweglich und über Federn befestigt ist. Zeigt das Einlegeteil Abweichungen von der Normgröße nach oben, so drückt das Einlegeteil beim Schließen der Spritzgussform gegen diesen Werkzeugeinsatz, der daraufhin gegen die Federkraft zurückweicht. Auf diese Weise ist sichergestellt, dass die dem Werkzeugeinsatz zugewandte Seite des Einlegeteils stets relativ zum umgebenen Kunststoff gleich orientiert ist. Gegenüber den sonstigen Flächen des Spritzgussteils hängt die Lage dieser Region jedoch von den Dimensionen des Einlegeteils ab.

Grundsätzlich wäre es zwar möglich, den Werkzeugeinsatz so groß zu machen, dass er die vollständige Stirnfläche des späteren Spritzgussteils abgedeckt. Das aber führt zu Problemen bei der Kühlung des Werkzeugeinsatzes und bei der Dimensionierung der Federn, da der Kunststoff unter hohem Druck von der in der Regel mehreren 100 bar in die Spritzgussform eingespritzt wird und die Federn diesem Druck standhalten müssen. Bei der erfindungsgemäßen Lösung ist, wie in einer bevorzugten Ausführungsform vorgesehen, eine Kühlung der Spritzgussform auch unmittelbar benachbart zum Einlegeteil möglich. Das führt vorteilhafterweise auch zu einer Verkürzung der Taktzeit.

Unter dem Schließen der Spritzgussform wird insbesondere derjenige zeitliche Abschnitt des Verfahrens verstanden, bei dem zumindest ein Teil der Spritzgussform auf den zumindest einen anderen Teil zu bewegt wird, so dass ein Hohlraum entsteht, in dem ein Einlegeteil zumindest teilweise aufgenommen ist und in den der Kunststoff im weiteren Verfahren eingespritzt wird.

Gemäß einer bevorzugten Ausführungsform hat das Metall des Einlegeteils eine Streckgrenze und die Spritzgussform wird so geschlossen, dass die Streckgrenze überschritten wird. Es kommt dann zu einer plastischen Deformation des Einlegeteils. Vorzugsweise wird das Einlegeteil so in die Spritzgussform gelegt, dass es beim Schließen der Spritzgussform an einer ersten Einlegeteil-Bezugsfläche und zumindest einer der ersten Einlegeteil-Bezugsfläche gegenüberliegenden zweiten Einlegeteil-Bezugsfläche an der Spritzgussform anliegt. Insbesondere liegt das Einlegeteil in beiden Einlegeteil-Bezugsflächen flächig an der Spritzgussform an. Das führt das dazu, dass das Einlegeteil nur seitlich umspritzt wird. Das Einlegeteil ist dann im fertigen Spritzgussteil von beiden Seiten offen zugänglich.

In diesem Fall kann es vorteilhaft sein, dass die Spritzgussform so geschlossen wird, dass sich die erste Einlegeteil-Bezugsfläche auf die zweite Einlegeteil-Bezugsfläche zu bewegt, so dass das Einlegeteil zwischen den Einlegeteil-Bezugsflächen gestaucht wird. Diese Stauchung ist umso größer, je größer die Abmessungen des Einlegeteils zwischen den beiden Einlegeteil-Bezugsflächen sind. Nach dem Öffnen der Spritzgussform beträgt die Länge des Einlegeteils stets den Abstand zwischen der ersten und der zweiten Einlegeteil-Bezugsfläche plus dem elastischen Rückfederweg des Einlegeteils, der aber unabhängig von der ursprünglichen Länge des Einlegeteils ist.

Gemäß einer bevorzugten Ausführungsform ist das Einlegeteil eine Metallhülse. Beispielsweise ist die Metallhülse zumindest auf der Innenseite hohl-zylinderförmig. Diese Metallhülse kann ein Innengewinde aufweisen, das ist aber nicht notwendig.

Besonders bevorzugt besitzt die Metallhülse eine Längsachse, wobei die Einlegeteil-Bezugsflächen die Stirnflächen der Metallhülse sind und wobei das Einlegeteil beim Schließen in Richtung der Längsachse plastisch deformiert wird.

Bevorzugt wird eine Spritzgussform verwendet, bei der zumindest ein Anlagebereich der Spritzgussform, an dem zumindest eine Anlageteil-Bezugsfläche beim Schließen anliegt, gegenüber einer Umgebung des Anlagebereichs hervorsteht, so dass eine Höhendifferenz zwischen der Einlegeteil-Bezugsfläche und einer Spritzgussteil-Bezugsfläche in einer Umgebung des Einlegeteils gegenüber dem Fall verringert wird, dass der Anlagebereich nicht hervorsteht. Beim Erkalten des Spritzgussteils in der Spritzgussform oder nach dem Ausstoßen aus der Spritzgussform schrumpft der Kunststoff. Es kann dadurch zu einem Überstand des Einlegeteils über dem benachbarten Kunststoff kommen. Das wird vermieden, wenn der Anlagebereich der Spritzgussform gegenüber seiner Umgebung hervorspringt. Es ist so erreichbar, dass nach einem Erkalten des Spritzgussteils die Stirnseite des Einlegeteils plan mit dem umgebenen Kunststoff abschließt.

Gemäß einer bevorzugten Ausführungsform wird das Verfahren mehrfach durchgeführt, so dass eine Mehrzahl an Metallhülsen verwendet wird, wobei die Metallhülsen eine Nennhöhe und eine Vor-Höhentoleranz haben, wobei die umspritzte Metallhülse im fertigen Spritzgussteil eine End-Höhentoleranz hat, die kleiner ist als die Vor-Höhentoleranz. Auf diese Weise lassen sich die Metallhülsen auf besonders kostengünstige Weise herstellen, da ein etwaiges Nachbearbeiten zum Einhalten der End-Höhentoleranz entfällt.

Besonders günstig wird die Spritzgussform im Anlagebereich gekühlt. Auf diese Weise ist ein besonders schnelles Entformen möglich. Aufgrund der Tatsache, dass bei einem federnd gelagerten Werkzeugeinsatz eine Kühlung des Werkzeugeinsatzes kaum möglich ist, lässt sich gegenüber herkömmlichen Verfahren eine Fertigungszeitreduzierung erreichen.

Im Folgenden wird die Erfindung bezüglich der weiteren Aspekte anhand der beigefügten Zeichnungen näher erläutert. Dabei zeigt
- Figur 1: eine Spritzgussform, wie sie in Verfahren nach dem Stand der Technik verwendet wird,
- Figur 2: einen Ausschnitt aus der Spritzgussform gemäß Figur 1 zur Erläuterung der Probleme im Stand der Technik,
- Figur 3: mit den Teilfiguren 3a, b und c eine Spritzgussform einer erfindungsgemäßen Spritzgießmaschine zum Durchführen eines erfindungsgemäßen Verfahrens.
- Figur 4: ist eine schematische Darstellung eines Teils des fertigen Spritzgussteils im Bereich des Einlegeteils zur Erläuterung der Höhendifferenz,
- Figur 5: ist eine schematische Spannungs-Dehnungskurve des Metalls, aus dem das Einlegeteil besteht und
- Figur 6: ist eine schematische Ansicht einer erfindungsgemäßen Spritzgießmaschine.
- Figur 7: zeigt eine Schnittzeichnung eines erfindungsgemäßen Spritzgussteils (Figur 7a) und einen Ausschnitt des Spritzgussteils (Figur 7b),
- Figur 8: eine Draufsicht auf das erfindungsgemäße Spritzgussteil gemäß Figur 7 und
- Figur 9: den Verlauf der von der Schraube auf das Spritzgussteil ausgeübten Kraft in Abhängigkeit von dem Stellweg der Schraube für ein konventionelles und ein erfindungsgemäßes Spritzgussteil.

Zunächst wird ein Verfahren beschrieben, mittels dem ein erfindungsgemäßes Spritzgussteil herstellbar ist.

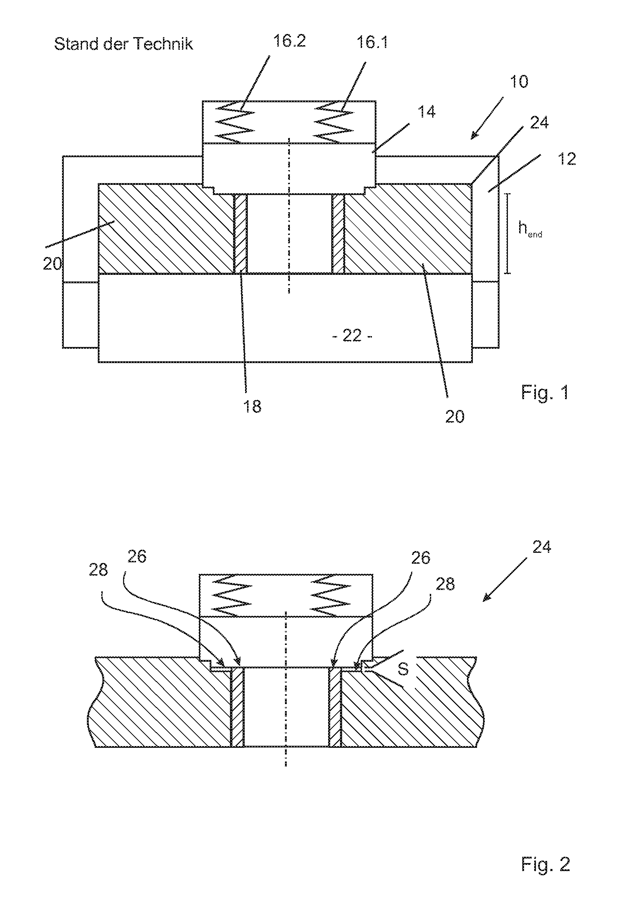

Figur 1 zeigt eine Spritzgussform 10 nach dem Stand der Technik, die dreiteilig aufgebaut ist und ein erstes Grundteil 12, an dem ein Werkzeugeinsatz 14 mittels Federn 16.1, 16.2 befestigt ist. In der Spritzgussform 10 ist ein Einlegeteil 18 angeordnet, das von Kunststoff 20 umspritzt ist.

Die bekannte Spritzgussform 10 wird im Rahmen eines Spritzgussverfahrens verwendet, in dem zunächst das Einlegeteil 18 in die Spritzgussform 10 eingelegt wird. Dann wird ein zweites Grundteil 22 um ein vorgegebenes Maß in das erste Grundteil 12 eingeschoben. Wenn das Einlegeteil eine Höhe h hat, die nicht exakt der Nenn-Höhe entspricht, sondern größer ist, so schiebt das zweite Grundteil 22 das Einlegeteil 18 gegen den Werkzeugeinsatz 14, woraufhin die Federn 16 nachgeben. Nachfolgend wird der Kunststoff 20 um das Einlegeteil 18 gespritzt, so dass ein Spritzgussteil 24 entsteht.

Figur 2 zeigt, dass beim fertigen Spritzgussteil 24 zwischen einer Einlegeteil-Bezugsfläche 26, mit der das Einlegeteil 18 an der Spritzgussform 10 anliegt, und einer Spritzgussteil-Bezugsfläche 28 in der Umgebung der Spritzgussteil-Bezugsfläche 28, eine Höhendifferenz S besteht. Diese Höhendifferenz hängt von der Höhe h des Einlegeteils 18 ab und kann damit im Rahmen der Toleranz des Einlegeteils 18 schwanken, was unerwünscht ist.

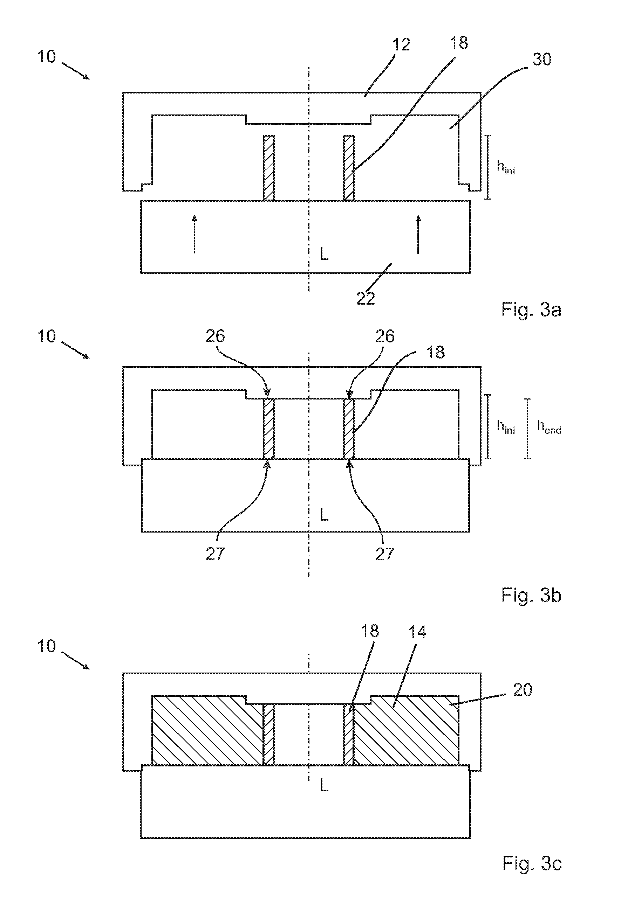

Figur 3a zeigt eine Spritzgussform 10 zum Durchführen eines erfindungsgemäßen Verfahrens. Die Spritzgussform 10 umfasst das erste Grundteil 12 und das zweite Grundteil 22, das im geschlossenen Zustand der Spritzgussform 10 zusammen mit dem ersten Grundteil 12 einen geschlossenen Hohlraum 30 umgibt. Ein erfindungsgemäßes Verfahren wird durchgeführt, indem in die geöffnete Spritzgussform 10 das Einlegeteil 18 in Form einer hohlzylinderförmigen Metallhülse eingelegt wird. Das Einlegeteil 18 hat zu Beginn eine Höhe hᵢₙᵢ, die von einer Nenn-Höhe h_{Nenn} um eine Vor-Höhentoleranz abweichen kann.

In einem zweiten Schritt wird die Spritzgussform 10 geschlossen, indem das zweite Grundteil 22 auf das erste Grundteil 12 zu gepresst wird. Selbstverständlich ist auch möglich, dass die beiden Grundteile oder eine Mehrzahl an Grundteilen aufeinander zu bewegt werden und dann aneinander anliegen. Es ist auch möglich, dass in der Spritzgussform beispielsweise Schieber angeordnet sind. Das Schließen der Spritzgussform erfolgt so, dass diese nach dem Schließen der Spritzgussform einen vorgegebenen Hohlraum mit exakt definierten Innenmaßen begrenzt. In anderen Worten wird im vorliegenden Fall das zweite Grundteil so relativ zum ersten Grundteil an einer definierten Stelle positioniert.

Wenn das Einlegeteil 18 wie im vorliegenden Fall länger ist als es für das fertige Spritzgussteil beabsichtigt ist, so wird es beim Zusammenfahren der Spritzgussform, also beim Schließen der Spritzgussform 10, gestaucht. Es bewegt sich dadurch die erste Einlegeteil-Bezugsfläche 26 auf eine gegenüber liegende zweite Einlegeteil-Bezugsfläche 27 (vgl. Figur 1) zu, so dass es nach dem Schließen der Spritzgussform die Höhe h_{end} hat. Die Situation ist in Figur 3b gezeigt.

Figur 3c zeigt den Zustand, in dem das Einlegeteil 18 mit dem Kunststoff 20 umspritzt worden ist. Nachfolgend wird das fertige Spritzgussteil 24 entformt und ausgestoßen. Es ist zu erkennen, dass die Spritzgussform 10 einen Anlagebereich 29 aufweist, mit dem sie an der ersten Einlegeteil-Bezugsfläche 26 anliegt. Der Anlagebereich 29 steht gegenüber seiner Umgebung hervor, so dass sich im fertigen Spritzgussteil eine Einsenkung ergibt. In diese Einsenkung kann eine Schraube versenkt werden, die die Hülse zum Befestigen des Spritzgussteils an einem anderen Objekt durchgreift.

Hat der Anlagebereich 29 einen Außendurchmesser, der dem Außendurchmesser der Metallhülse 18 entspricht, kann erreicht werden, dass im fertigen Spritzgussteil die Höhendifferenz S (siehe Figur 2), im Rahmen einer vorgegebenen Toleranz einen vorgegebenen Wert annimmt, beispielsweise null.

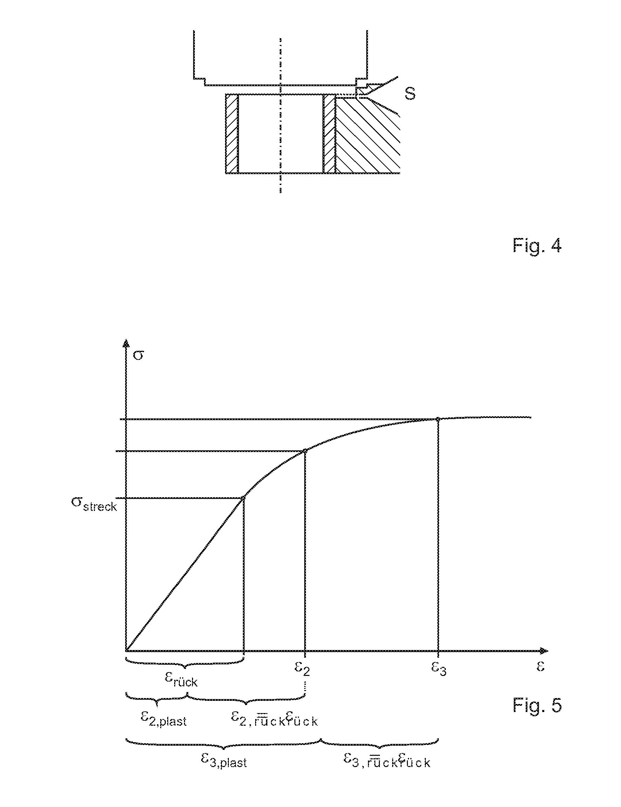

Figur 4 zeigt die Höhendifferenz S, die lediglich von dem elastischen Rückfederweg des Einlegeteils 18 und von der Schrumpfung des Kunststoffs 20 abhängt. Die Schrumpfung des Kunststoffs 20 ist stets gleich, das gleiche gilt für den elastischen Rückfederweg. Aus diesem Grund ist die Höhendifferenz S stets mit großer Reproduzierbarkeit gleich.

Figur 5 zeigt eine Spannungs-Dehnungskurve des Werkstoffs, aus dem das Einlegeteil 18 hergestellt ist. Es ist zu erkennen, dass ein zunächst linearer Bereich existiert, der auch als Hook'scher Bereich bezeichnet wird. Oberhalb einer Streckgrenze σ_{streck} beginnt der Werkstoff, sich plastisch zu verformen. Wird das Einlegeteil 18, insbesondere die Metallhülse, so gestaucht, dass die Streckgrenze des Materials überschritten wird, so kommt es zu einer plastischen Verformung und bei der Entlastung beim Entformen zu einer Rückfederung, wobei sich die elastische Verformung des Einlegeteils 18 löst. Diese Rückfederung entspricht einer Rückdehnung ε_{rück}, die schematisch eingezeichnet ist. Es ist zu erkennen, dass dann, wenn die Spannung σ die Streckgrenze σ_{streck} überschritten hat, beispielsweise bei den Dehnungen ε₃ und ε₄, beim nachfolgenden Rückfedern lediglich ein Teil der Dehnung, nämlich der Betrag ε_{streck} rückfedert. Es bleibt eine Dehnung εₚₗₐₛₜ, die den plastischen Anteil der Verformung darstellt, die elastischen Rückfederungen εₚₗₐₛₜ sind von der plastischen Verformung εₚₗₐₛₜ unabhängig.

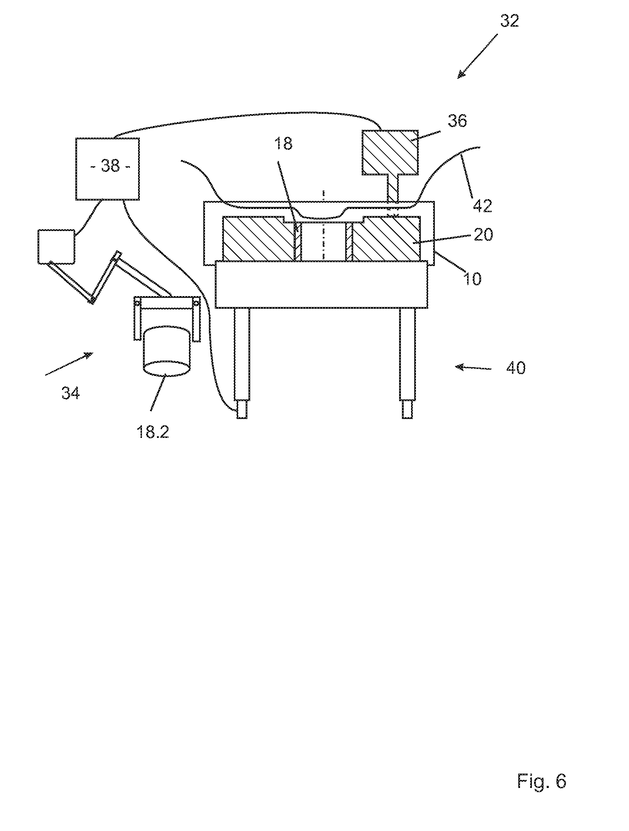

Figur 6 zeigt schematisch eine Spritzgießmaschine 32 mit der Spritzgussform 10 einer in Form eines Greifers angedeuteten Einlegevorrichtung 34 zum Einlegen des Einlegeteils 18 in die Spritzgussform 10 und einer ebenfalls schematisch eingezeichneten Einspritzeinheit 36, die beispielsweise einen Extruder enthält und ausgebildet ist, um den Kunststoff 20 in die Spritzgussform 10 einzuspritzen. Die Spritzgießmaschine 32 umfasst zudem einen Antrieb 40, im vorliegenden Fall von angedeuteten Hydraulikzylindern, mittels derer die Spritzgussform 10 geöffnet und geschlossen werden kann. Nicht eingezeichnet ist eine Entformvorrichtung. Schematisch eingezeichnet ist zudem eine Wasserkühlung 42, die auch den Bereich der Spritzgussform 10 erfasst, der unmittelbar am Einlegeteil 18 anliegt.

Eine schematisch eingezeichnete Steuereinheit 38 ist mit der Einlegevorrichtung 34, dem Antrieb 40 und der Einspritzeinheit 36 zum Ansteuern verbunden. Die Steuereinheit 38 enthält einen digitalen Speicher, in dem ein Programm abgelegt ist, das automatisch ausgeführt wird, so dass die Einlegevorrichtung 34 angesteuert wird, so dass das Einlegeteil 18 von der Einlegevorrichtung in die Spritzgussform 19 eingelegt wird. Danach wird der Antrieb 40 so angesteuert, dass die Spritzgussform 10 so geschlossen wird, dass das Einlegeteil 18 plastisch deformiert wird. Nachfolgend wird die Einspritzeinheit 36 so angesteuert, dass das Einlegeteil 18 mit Kunststoff umspritzt wird und ein Spritzgussteil entsteht. Günstig ist es, wenn danach der Antrieb angesteuert wird, so dass die Spritzgussform geöffnet wird. Eine etwaig vorhandene Ausstoßvorrichtung wird danach angesteuert zum Ausstoßen des fertigen Spritzgussteils. Danach beginnt der Vorgang erneut.

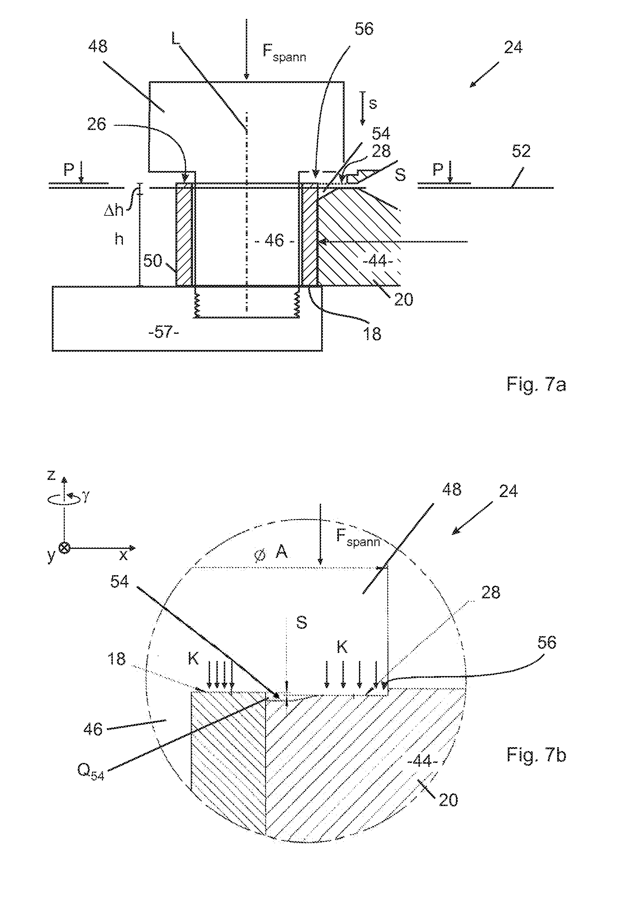

Figur 7a zeigt ein erfindungsgemäßes Spritzgussteil 24 mit dem hülsenförmigen Einlegeteil 18 und einem Kunststoffkörper 44 aus Kunststoff 20. Das Einlegeteil 18 besitzt eine Längsachse L, die mit einer Ausnehmungs-Längsachse L₄₆ einer Ausnehmung 46 in dem Einlegeteil 18 übereinstimmt. Das Einlegeteil 18 besitzt zudem eine erste Einlegeteil-Bezugsfläche 26, die im Folgenden als Stirnfläche 26 bezeichnet wird. Die Ausnehmung 46 verläuft durch die Stirnfläche 26 und durchgreift das Einlegeteil 18 vollständig, das heißt, dass eine schematisch eingezeichnete Schraube 48 vollständig durch das Einlegeteil 18 gesteckt werden kann. Radial nach außen wird das Einlegeteil 18 durch eine äußere Mantelfläche 50 begrenzt.

Der Kunststoffkörper 44 umgibt die äußere Mantelfläche 50 und besitzt eine Spritzgussteil-Bezugsfläche, die im Folgenden als Schrauben-Kontaktfläche 28 bezeichnet wird.

Die Schrauben-Kontaktfläche 28 erstreckt sich entlang einer Kontaktebene 52, die senkrecht zur Längsachse L verläuft. Bezüglich einer Höhe z entlang der Längsachse L erstreckt sich die Kontaktebene 52 im Bereich der Stirnfläche 26, im vorliegenden Fall hat sie nämlich nur einen Abstand in Form eine Höhendifferenz S, die im Folgenden als Unterstand S bezeichnet wird. Die Kontaktebene ist diejenige Ebene, in der ein Großteil der Schrauben-Kontaktfläche 28 liegt.

In einer Senkung 54 weicht die Schrauben-Kontaktfläche 28 von der Kontaktebene 52 ab. Die Senkung 54 umgibt das Einlegeteil 18 radial. Ein Querschnitt Q₅₄ der Senkung 54 ist so ausgebildet, dass dann, wenn die Schraube 48 auf die Schrauben-Kontaktfläche 28 drückt, etwaig zu fließen beginnender Kunststoff 20 in die Senkung 54 fließt und so nicht in den Bereich der Stirnfläche 26 kommen kann.

Das Einlegeteil 18 besitzt bezüglich der Längsachse L eine Federkonstante k, die eine Abhängigkeit einer Änderung der Höhe h des Einlegeteils um einen Betrag Δh in Abhängigkeit von einer Spannkraft F_{Spann}, die von der Schraube 48 auf das Einlegeteil 18 ausübt, wenn die Schraube angezogen wird. Da die Federkonstante k meist linear ist, bezieht sich die maßgebliche Federkonstante k auf eine Höhenänderung Δh = S, also um den Unterstand S.

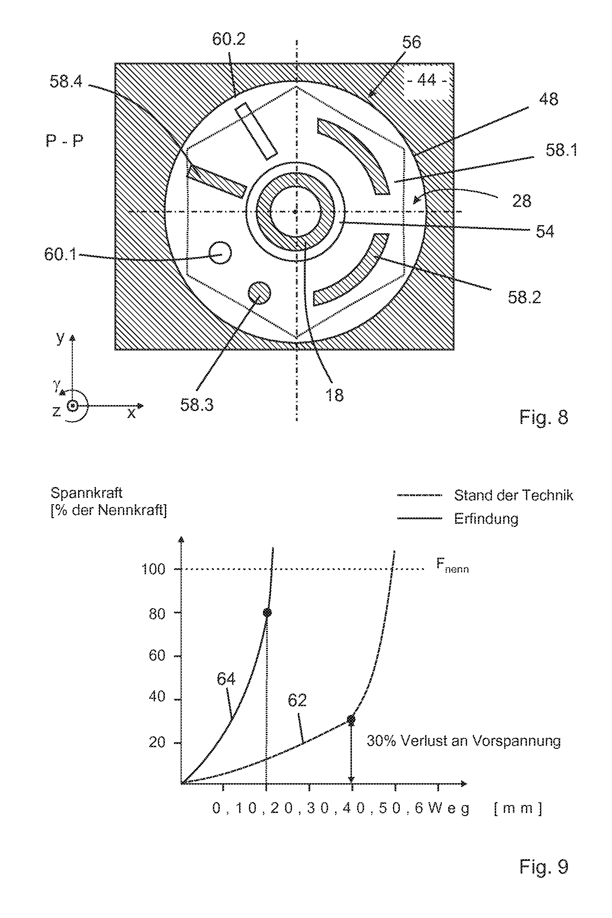

Der Unterstand S und die Federkonstante k sind so gewählt, dass dann, wenn die Schraube 48 mit ihrem Kopf die Spannkraft F_{Spann} auf das Einlegeteil 18 ausübt, zunächst das Einlegeteil 18 deformiert wird, bevor die Schraube 48, insbesondere mit ihrem Kopf, in Kontakt mit dem Kunststoffkörper 44 kommt. Der Verlauf der Spannkraft in Abhängigkeit von dem Weg s in Richtung der Längsachse ab dem erstmaligen In-Kontakt-Kommen mit dem Spritzgussteil ist in Figur 9 weiter unten beschrieben.

Figur 7a zeigt schematisch ein Objekt 57, an dem das Spritzgussteil 24 mittels der Schraube 48 befestigt ist.

Figur 7b zeigt eine Detailansicht aus Figur 7a. Es ist zu erkennen, dass das Einlegeteil 18 hohlzylinderförmig ist. Die Schrauben-Kontaktfläche 28 ist eine Bodenfläche einer Einsenkung 56 im Kunststoffkörper 44, deren Innen-Durchmesser im vorliegenden Fall genau mit einem Kopfdurchmesser A der Schraube 48 identisch ist.

Figur 7b zeigt zudem, dass dann, wenn die Schraube 48 hinreichend weit auf das Spritzgussteil 24 zugestellt ist, ein Kraftfluss K aus der Schraube 48 sowohl in das Einlegeteil 18 als auch in den Kunststoffkörper 44 vorliegt. Wie unten im Zusammenhang mit Figur 9 erläutert, werden der Unterstand S und die Federkonstante k so gewählt, dass die Spannkraft F_{Spann} der Schraube zu höchstens 90% am Einlegeteil 18 und nur zum verbleibenden Rest am Kunststoffkörper 44 direkt anliegt.

Figur 8 zeigt einen Blick von oben auf eine Schnittebene bezüglich des Schnitts P-P (vgl. Fig. 7a), das heißt bezüglich der Ebene, in der die Stirnfläche 26 liegt. Es ist zu erkennen, dass die Schraube 48 in dieser Ausführungsform einen Kopfdurchmesser A hat, der sich vom Innendurchmesser A₅₆ der Einsenkung 56 um einen kleinen Betrag, nämlich einen vorgegebenen Toleranzwert, unterscheidet.

Figur 8 zeigt zudem Erhebungen 58.1, 58.2, ..., die sich über die Kontaktebene 52 (vgl. Fig. 7a) erheben. Zu erkennen sind zudem Vertiefungen 60.1, 60.2 in der Schrauben-Kontaktfläche 28.

Figur 9 zeigt den Verlauf der Spannkraft F_{Spann} in Abhängigkeit von dem Weg s, den die Schraube 48 entlang der Längsachse L ab dem Moment des ersten In-Kontakt-Kommens mit dem Spritzgussteil 24 zurücklegt. Gestrichelt ist die entsprechende Kurve für ein Spritzgussteil nach dem Stand der Technik eingezeichnet. In einem ersten Abschnitt 62 ist die Federkonstante k_{SdT} klein, da die Schraube zunächst nur mit Kunststoff in Kontakt kommt. Sobald die Schraube in Kontakt mit dem Einlegeteil 18 kommt, steigt die Federkonstante schlagartig an. Das ist in Figur 9 bei s = 0,4 mm der Fall.

Bei einem Spritzgussteil nach der Erfindung, deren Kurve durchgezogen gezeichnet ist, steigt die Kraft in einem ersten Abschnitt 64 steiler an, das heißt, dass die Federkonstante zu Beginn größer ist. Ab dem Weg, ab dem die Schraube in Kontakt mit dem Kunststoff kommt, nimmt die Federkonstante zu. Das ist bei s = 0,2 mm der Fall. Die Zunahme der Federkonstante jenseits des Kontaktpunkts ist aber deutlich kleiner als bei dem Spritzgussteil nach dem Stand der Technik.

Figur 9 zeigt, dass für das Befestigen des Spritzgussteils 24 ein kürzerer Weg s von der Schraube zurückzulegen ist. Da bei dem Spritzgussteil gemäß der Erfindung bereits eine große Kraft am Einlegeteil anliegt, bevor die Schraube in Kontakt mit dem Kunststoffkörper kommt, wird der Kunststoffkörper weniger stark deformiert. Da das Metall des Einlegeteils 18, anders als der Kunststoff, kein Kriechen zeigt, führt das dazu, dass die Spannkraft F_{Spann} zeitlich konstant bleibt, auch unter Vibrationsbelastungen.

### Bezugszeichenliste

- 10: Spritzgussform
- 12: erstes Grundteil
- 14: Werkzeugeinsatz
- 16: Feder
- 18: Einlegeteil

- 20: Kunststoff
- 22: zweites Grundteil
- 24: Spritzgussteil
- 26: erste Einlegeteil-Bezugsfläche, Stirnfläche
- 27: zweite Einlegeteil-Bezugsfläche
- 28: Spritzgussteil-Bezugsfläche, Schrauben-Kontaktfläche
- 29: Anlagebereich

- 30: Hohlraum
- 32: Spritzgießmaschine
- 34: Einlegevorrichtung
- 36: Einspritzeinheit
- 38: Steuereinheit

- 40: Antrieb
- 42: Wasserkühlung
- 44: Kunststoffkörper
- 46: Ausnehmung
- 48: Schraube

- 50: äußere Mantelfläche
- 52: Kontaktebene
- 54: Senkung
- 56: Einsenkung
- 57: Objekt
- 58: Erhebung

- 60: Vertiefung
- 62: Abschnitt

- h: Höhe
- S: Höhendifferenz
- h_{Nenn}: Nenn-Höhe

- L: Längsachse
- L₄₆: Ausnehmungs-Längsachse
- S: Unterstand
- Q₅₄: Querschnitt
- F_{Spann}: Spannkraft
- k: Federkonstante
- A: Kopfdurchmesser
- A₅₆: Durchmesser der Einsenkung
- K: Kraftfluss

## Patentansprüche

1. Spritzgussteil mit
(a) einem hülsenförmigen Einlegeteil (18) aus Metall, das
- eine Längsachse (L),
- eine Stirnfläche (26),
- eine Ausnehmung (46),
die durch die Stirnfläche (26) verläuft,
das Einlegeteil (18) durchgreift und
zum Durchstecken einer Schraube (48) ausgebildet ist, und
- eine äußere Mantelfläche (50) aufweist, und
(b) einem Kunststoffkörper (44), der
- die äußere Mantelfläche (50) umgibt und
- eine Schrauben-Kontaktfläche (28) aufweist,
die sich entlang einer Kontaktebene (52) erstreckt,
die senkrecht zur Längsachse (L) und
bezüglich einer Höhe entlang der Längsachse (L) im Bereich der Stirnfläche (26) verläuft,
(c) wobei die Schrauben-Kontaktfläche (28) einen Unterstand (S) zur Stirnfläche (26) aufweist, und
(d) wobei der Unterstand (S) so groß ausgebildet ist und das Einlegeteil (18) bezüglich der Längsachse (L) eine solche Federkonstante (k) aufweist, dass durch Ausüben einer Spannkraft (F_{Spann}) senkrecht auf die Stirnfläche (26) mittels der Schraube (48) das Einlegeteil (18) so aufgrund der Spannkraft (F_{Spann}) deformierbar ist, dass ein vorgegebener Teil der Spannkraft (F_{Spann}) der Schraube (48) in die Schrauben-Kontaktfläche (28) einleitbar ist,
**dadurch gekennzeichnet, dass**
(e) auf der Schrauben-Kontaktfläche (28) zumindest eine Erhebung (58) angeordnet ist.

2. Spritzgussteil nach Anspruch 1, **dadurch gekennzeichnet, dass** das Einlegeteil (18) ist hohlzylinderförmig ist.

3. Spritzgussteil nach einem der vorstehenden Ansprüche, **dadurch gekennzeichnet, dass**
- die Schrauben-Kontaktfläche (28) eine Bodenfläche einer Einsenkung (56) im Kunststoffkörper (44) ist,
- wobei ein Innen-Durchmesser der Einsenkung (56) um ein Toleranzmaß größer ist als ein Kopf der Schraube (48).

4. Spritzgussteil nach einem der vorstehenden Ansprüche, **dadurch gekennzeichnet, dass** der Unterstand (S) und das Einlegeteil (18) so groß ausgebildet sind, dass ein Kraftfluss der Spannkraft (F_{Spann}) der Schraube (48) zu mindestens 80%, insbesondere zu mindestens 85%, durch das Einlegeteil (18) verläuft.

5. Spritzgussteil nach Anspruch 1, **dadurch gekennzeichnet, dass**
- die Ausnehmung (46) des Einlegeteils (18) eine Ausnehmungs-Längsachse (L₄₆) besitzt und
- die Erhebung (58) bezüglich einer Höhe (z) entlang der Ausnehmungs-Längsachse (L₄₆) die Stirnfläche (26) überragt.

6. Spritzgussteil nach einem der vorstehenden Ansprüche, **gekennzeichnet durch** eine das Einlegeteil (18) radial umgebende Senkung (54), deren Querschnittsfläche (Q₅₄) ausgebildet ist zum Verhindern eines Eindringens von Kunststoff zwischen die erste Stirnfläche (26) und die Schraube (48) beim Ausüben der Spannkraft (F_{Spann}) auf die Stirnfläche (26) mittels der Schraube (48).

7. Baugruppe, insbesondere Kraftfahrzeug, mit
(i) zumindest einem Spritzgussteil (24) nach einem der vorstehenden Ansprüche und
(ii) einer Schraube (48), die die Ausnehmung (46) durchgreift und so das Spritzgussteil (24) an einem Objekt befestigt,
(iii) wobei ein Kraftfluss (K) der Spannkraft (F_{Spann}) der Schraube (48) zu mindestens 80%, insbesondere zu mindestens 85%, durch das Einlegeteil (18) verläuft.

8. Verfahren zum Herstellen eines Spritzgußteils (24) nach einem der vorstehenden Ansprüche, mit den Schritten:
(a) Einlegen des Einlegeteils (18) aus Metall in eine Spritzgussform,
(b) Schließen der Spritzgussform und
(c) Umspritzen des zumindest einen Einlegeteils (18) mit einem Kunststoff, so dass das Spritzgussteil (24) entsteht,
wobei
(d) die Spritzgussform so geschlossen wird, dass das zumindest eine Einlegeteil (18) plastisch deformiert wird, so dass ein Spritzgussteil (24) nach einem der vorstehenden Ansprüche entsteht.

## Claims

1. Injection-moulded part, comprising
(a) a sleeve-shaped insert (18) made of metal, which has
- a longitudinal axis (L),
- an end face (26),
- a clearance (46),
which runs through the end face (26), passes through the insert (18) and
is designed such that a screw (48) can be inserted through it, and
- an outer lateral surface (50) and
(b) a plastic body (44), which
- surrounds the outer lateral surface (50) and
- has a screw contact surface (28),
which extends along a contact plane (52)
that runs perpendicularly to the longitudinal axis (L) and,
with respect to a height, along the longitudinal axis (L) in the region of the end face (26),
(c) wherein the screw contact surface (28) has a difference in height (S) with respect to the end face (26),
(d) wherein the difference in height (S) is of such a size and the insert (18) has such a spring constant (k) with respect to the longitudinal axis (L) that, by exerting a clamping force (F_{clamp}) perpendicularly to the end face (26) by means of the screw (48), the insert (18) can be deformed on the basis of the clamping force (F_{clamp}) such that a predetermined component of the clamping force (F_{clamp}) of the screw (48) can be introduced into the screw contact surface (28),
**characterized in that**
(e) at least one elevation (58) is arranged on the screw contact surface (28).

2. Injection-moulded part according to Claim 1, **characterized in that** the insert (18) is hollow-cylindrical.

3. Injection-moulded part according to one of the preceding claims, **characterized in that**
- the screw contact surface (28) is a bottom surface of a depression (56) in the plastic body (44),
- wherein an inside diameter of the depression (56) is larger than a head of the screw (48) by an amount of tolerance.

4. Injection-moulded part according to one of the preceding claims, **characterized in that** the difference in height (S) and the insert (18) are of such a size that at least 80%, in particular at least 85%, of a flow of force of the clamping force (F_{clamp}) of the screw (48) passes through the insert (18).

5. Injection-moulded part according to Claim 1, **characterized in that**
- the clearance (46) of the insert (18) has a longitudinal clearance axis (L₄₆) and
- the elevation (58) protrudes beyond the end face (26) with respect to a height (z) along the longitudinal clearance axis (L₄₆).

6. Injection-moulded part according to one of the preceding claims, **characterized by** a countersink (54) which radially surrounds the insert (18) and the cross section (Q₅₄) of which is designed to prevent plastic from getting in between the first end face (26) and the screw (48) when the clamping force (F_{clamp}) is exerted on the end face (26) by means of the screw (48).

7. Assembly, in particular a motor vehicle, comprising
(i) at least one injection-moulded part (24) according to one of the preceding claims and
(ii) a screw (48), which passes through the clearance (46) and thus fastens the injection-moulded part (24) to an object,
(iii) wherein at least 80%, in particular at least 85%, of a flow of force (K) of the clamping force (F_{clamp}) of the screw (48) passes through the insert (18).

8. Method for producing an injection-moulded part (24) according to one of the preceding claims, comprising the steps of:
(a) placing the insert (18) made of metal into an injection mould,
(b) closing the injection mould and
(c) encapsulating the at least one insert (18) with a plastic, so that the injection-moulded part (24) is obtained,
wherein
(d) the injection mould is closed in such a way that the at least one insert (18) is plastically deformed, so that an injection-moulded part (24) according to one of the preceding claims is obtained.

## Revendications

1. Pièce moulée par injection comprenant
(a) une pièce d'insertion en forme de douille (18) en métal, qui présente
- un axe longitudinal (L),
- une surface frontale (26),
- un évidement (46),
qui s'étend à travers la surface frontale (26),
traverse la pièce d'insertion (18) et
est réalisé pour le perçage d'une vis (48), et
- une surface d'enveloppe extérieure (50), et
(b) un corps en plastique (44), qui
- entoure la surface d'enveloppe extérieure (50) et
- présente une surface de contact de vis (28), qui s'étend le long d'un plan de contact (52),
qui s'étend perpendiculairement à l'axe longitudinal (L) et le long de l'axe longitudinal (L) dans la région de la surface frontale (26) en hauteur,
(c) la surface de contact de vis (28) présentant un retrait (S) par rapport à la surface frontale (26), et
(d) le retrait (S) étant réalisé de manière suffisamment grande et la pièce d'insertion (18) présentant par rapport à l'axe longitudinal (L) une constante de ressort (k) telle que par l'application d'une force de serrage (F_{Spann}) verticalement sur la surface frontale (26) au moyen de la vis (48), la pièce d'insertion (18) puisse être déformée du fait de la force de serrage (F_{Spann}) de telle sorte qu'une partie prédéterminée de la force de serrage (F_{Spann}) de la vis (48) puisse être introduite dans la surface de contact de vis (28), **caractérisée en ce**
(e) **qu'**au moins un rehaussement (58) est disposé sur la surface de contact de vis (28).

2. Pièce moulée par injection selon la revendication 1, **caractérisée en ce que** la pièce d'insertion (18) a une forme cylindrique creuse.

3. Pièce moulée par injection selon l'une quelconque des revendications précédentes, **caractérisée en ce que**
- la surface de contact de vis (28) est une surface de fond d'un renfoncement (56) dans le corps en plastique (44),
- un diamètre intérieur du renfoncement (56) étant plus grand, d'une dimension de tolérance, qu'une tête de la vis (48).

4. Pièce moulée par injection selon l'une quelconque des revendications précédentes, **caractérisée en ce que** le retrait (S) et la pièce d'insertion (18) sont réalisés de manière suffisamment grande pour qu'un flux de force de la force de serrage (F_{Spann}) de la vis (48) s'étende sur au moins 80 %, en particulier sur au moins 85 %, à travers la pièce d'insertion (18).

5. Pièce moulée par injection selon la revendication 1, **caractérisée en ce que**
- l'évidement (46) de la pièce d'insertion (18) possède un axe longitudinal d'évidement (L₄₆) et
- le rehaussement (58) dépasse de la surface frontale (26) en hauteur (z) le long de l'axe longitudinal de l'évidement (L₄₆).

6. Pièce moulée par injection selon l'une quelconque des revendications précédentes, **caractérisée par** un lamage (54) entourant radialement la pièce d'insertion (18), dont la surface en section transversale (Q₅₄) est réalisée de manière à empêcher la pénétration de plastique entre la première surface frontale (26) et la vis (48) lors de l'application de la force de serrage (F_{Spann}) sur la surface frontale (26) au moyen de la vis (48).

7. Module, en particulier véhicule automobile, comprenant
(i) au moins une pièce moulée par injection (24) selon l'une quelconque des revendications précédentes et
(ii) une vis (48) qui traverse l'évidement (46) et fixe ainsi la pièce moulée par injection (24) à un objet,
(iii) un flux de force (K) de la force de serrage (F_{Spann}) de la vis (38) s'étendant sur au moins 80 %, en particulier sur au moins 85 %, à travers la pièce d'insertion (18).

8. Procédé de fabrication d'une pièce moulée par injection (24) selon l'une quelconque des revendications précédentes, comprenant les étapes suivantes :
(a) insertion de la pièce d'insertion (18) en métal dans un moule de moulage par injection,
(b) fermeture du moule de moulage par injection et
(c) surmoulage de l'au moins une pièce d'insertion (18) avec un plastique, de telle sorte que la pièce moulée par injection (24) soit obtenue,
(d) le moule de moulage par injection étant fermé de telle sorte que l'au moins une pièce d'insertion (18) soit déformée plastiquement de telle sorte qu'une pièce moulée par injection (24) selon l'une quelconque des revendications précédentes soit obtenue.
